# EUROPEAN PATENT APPLICATION

(11) **EP 4 277 397 A1**
(43) Date of publication of application: **15.11.2023**
(21) Application number: 21939639.7
(22) Date of filing: 06.05.2021
(51) Int. Cl.: H04W 72/04

(54) **PDCCH MONITORING METHOD AND DRX UPLINK RETRANSMISSION TIMER CONTROL METHOD**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN)
(74) Representative: Novagraaf Technologies
(86) International application number: PCT/CN2021/091905
(87) International publication number: WO 2022/232991

(57) **Abstract**

The present application relates to the technical field of communications, and discloses a PDCCH monitoring method and a DRX uplink retransmission timer control method. For the PDCCH monitoring method, a terminal device begins to monitor a PDCCH from a moment corresponding to the Nth or (N+1)th duplicate transmission in a bundle corresponding to a PUSCH, and the value of N can be set according to values such as RTT between the terminal device and a network device, thereby avoid unnecessary PDCCH monitoring by the terminal device, facilitating power saving of a terminal. For the DRX uplink retransmission timer control method, the terminal device starts a DRX uplink retransmission timer at an appropriate time so as not to start same too early or too late, thereby ensuring that the terminal device does not miss receiving uplink HARQ-ACK feedback sent by the network device, facilitating power saving of a terminal.

## Description

### TECHNICAL FIELD

The embodiments of the present application relate to the field of communication technologies, and in particular, to a method for monitoring a Physical Downlink Control Channel (PDCCH) and a method for controlling a Discontinuous Reception (DRX) uplink retransmission timer.

### BACKGROUND

The Non-Terrestrial Network (NTN) technology is introduced into the 5G New Radio (NR) system. The NTN technology generally uses satellite communication to provide communication services to terrestrial users.

Compared with the traditional terrestrial cellular network, the signal transmission delay between the terminal device and the network side in the NTN system is greatly increased, and the Round Trip Time (RTT) is much larger than the terminal processing time considered in the existing standards. Therefore, it is necessary to make some technical improvements in combination with the characteristic that the signal transmission delay between the terminal device and the network side in the NTN system is relatively large.

### SUMMARY

The embodiments of the present application provide a method for monitoring a PDCCH and a method for controlling a DRX uplink retransmission timer. The technical solutions are as follows.

According to an aspect of the embodiments of the present application, a method for monitoring a PDCCH is provided, the method is executed by a terminal device, and the method includes:
monitoring a PDCCH during a DRX activation period from a first moment to a second moment;
where the first moment is a moment corresponding to a N^{th} or (N+1)^{th} repeated transmission in a bundle corresponding to a Physical Uplink Shared Channel (PUSCH), and the second moment is a moment corresponding to a last repeated transmission in the bundle, N is a positive integer.

According to an aspect of the embodiments of the present application, a method for controlling a DRX uplink retransmission timer is provided, the method is executed by a terminal device, and the method includes:
starting a DRX uplink retransmission timer at a first moment;
where the first moment is a moment corresponding to a N^{th} or (N+1)^{th} repeated transmission in a bundle corresponding to a PUSCH, and N is a positive integer.

According to an aspect of the embodiments of the present application, an apparatus for monitoring a PDCCH is provided, and the apparatus includes:
a monitoring module, configured to monitor a PDCCH during a DRX activation period from a first moment to a second moment;
where the first moment is a moment corresponding to a N^{th} or (N+1)^{th} repeated transmission in a bundle corresponding to a PUSCH, the second moment is a moment corresponding to a last repeated transmission in the bundle, and the N is a positive integer.

According to an aspect of the embodiments of the present application, an apparatus for controlling a DRX uplink retransmission timer is provided, and the apparatus includes:
a starting module, configured to start a DRX uplink retransmission timer at a first moment;
where the first moment is a moment corresponding to a N^{th} or (N+1)^{th} repeated transmission in a bundle corresponding to a PUSCH, and N is a positive integer.

According to an aspect of the embodiments of the present application, a terminal device is provided, and the terminal device includes a processor;
the processor is configured to monitor a PDCCH during a DRX activation period from a first moment to a second moment;
where the first moment is a moment corresponding to a N^{th} or (N+1)^{th} repeated transmission in a bundle corresponding to a PUSCH, the second moment is a moment corresponding to a last repeated transmission in the bundle, and N is a positive integer.

According to an aspect of the embodiments of the present application, a terminal device is provided, and the terminal device includes a processor;
the processor is configured to start a DRX uplink retransmission timer at a first moment;
where the first moment is a moment corresponding to a N^{th} or (N+1)^{th} repeated transmission in a bundle corresponding to a PUSCH, and N is a positive integer.

According to an aspect of the embodiments of the present application, a computer-readable storage medium is provided, where a computer program is stored in the storage medium, and the computer program is configured to be executed by a processor to implement the above-mentioned method for monitoring a PDCCH or the above-mentioned method for controlling a DRX uplink retransmission timer.

According to an aspect of the embodiments of the present application, a chip is provided, the chip includes a programmable logic circuit and/or program instructions, and when the chip is running, it is configured to implement the above-mentioned method for monitoring a PDCCH or the above-mentioned method for controlling a DRX uplink retransmission timer.

According to an aspect of the embodiments of the present application, there is provided a computer program product or computer program, the computer program product or computer program includes computer instructions, the computer instructions are stored in a computer-readable storage medium, and a processor reads and executes the computer instructions from the computer-readable storage medium to implement the above-mentioned method for monitoring a PDCCH or the above-mentioned method for controlling a DRX uplink retransmission timer.

The technical solutions provided by the embodiments of the present application may include the following beneficial effects.

The present application provides a method for monitoring a PDCCH. The terminal device does not start to monitor the PDCCH from the moment corresponding to the first repeated transmission in the bundle corresponding to the PUSCH, but starts to monitor the PDCCH from the moment corresponding to the N^{th} or (N+1)^{th} repeated transmission, where N is an integer greater than 1, and the value of N can be set according to a value such as the RTT between the terminal device and the network device, so as to avoid the terminal device from performing some unnecessary PDCCH monitoring, which is beneficial to power saving of the terminal.

The present application also provides a method for controlling a DRX uplink retransmission timer. The terminal device does not start the DRX uplink retransmission timer from the moment corresponding to the last repeated transmission, but starts the DRX uplink retransmission timer at a certain period of time after the first repeated transmission. During this period, the RTT between the terminal device and the network device and the processing time of the network device can be considered, so as to start the DRX uplink retransmission timer at the right time, and not start too early or too late, thereby ensuring that the terminal device does not miss receiving the uplink HARQ-ACK feedback sent by the network device, which is also beneficial to the power saving of the terminal.

### BRIEF DESCRIPTION OF THE DRAWINGS

FIG. 1 is a schematic diagram of a satellite network architecture of transparent forwarding provided by an embodiment of the present application;
FIG. 2 is a schematic diagram of a satellite network architecture of regenerative payload provided by an embodiment of the present application;
FIG. 3 is a flowchart of a method for monitoring a PDCCH provided by an embodiment of the present application;
FIG. 4 exemplarily shows a comparison diagram of the DRX activation period of the related art and the present application;
FIG. 5 is a flowchart of a method for controlling a DRX uplink retransmission timer provided by an embodiment of the present application;
FIGs. 6 to 8 exemplarily show schematic diagrams of the start timing and running duration of the DRX uplink retransmission timer;
FIG. 9 is a block diagram of an apparatus for monitoring a PDCCH provided by an embodiment of the present application;
FIG. 10 is a block diagram of an apparatus for controlling a DRX uplink retransmission timer provided by an embodiment of the present application;
FIG. 11 is a schematic structural diagram of a terminal device provided by an embodiment of the present application.

### DETAILED DESCRIPTION

In order to make the objectives, technical solutions and advantages of the present application clearer, the embodiments of the present application will be further described in detail below with reference to the accompanying drawings.

The network architecture and service scenarios described in the embodiments of the present application are for the purpose of illustrating the technical solutions of the embodiments of the present application more clearly, and do not constitute a limitation on the technical solutions provided by the embodiments of the present application. The person skilled in the art may know that with the evolution of network architecture and the emergence of new service scenarios, the technical solutions provided in the embodiments of the present application are also applicable to similar technical problems.

Currently, relevant standards organizations are studying NTN technology, which generally uses satellite communication to provide communication services to terrestrial users. Compared with terrestrial cellular communication networks, satellite communication has many unique advantages. First of all, satellite communication is not limited by the user's geographical area. For example, general terrestrial communication cannot cover areas such as oceans, mountains, deserts, etc. where communication equipment cannot be set up or communication cannot be covered due to sparse population. For satellite communication, due to that a single satellite can cover a large ground, and the satellite can orbit around the earth, theoretically every corner of the earth can be covered by satellite communications. Secondly, satellite communication has great social value. Satellite communication can cover at low cost in remote mountainous areas and poor and backward countries or regions, so that people in these regions can enjoy advanced voice communication and mobile Internet technologies, which is conducive to narrowing the digital divide with developed regions and promoting development in these regions. Thirdly, the satellite communication distance is long, and the communication cost does not increase significantly when the communication distance increases; finally, the satellite communication has high stability and is not limited by natural disasters.

Communication satellites are classified into Low-Earth Orbit (LEO) satellites, Medium-Earth Orbit (MEO) satellites, Geostationary Earth Orbit (GEO) satellites, High Elliptical orbit (HEO) satellites, etc. according to the different orbital altitudes. The main research at this stage is LEO and GEO.

### 1. LEO

The altitude range of low-orbit satellites is 500km to 1500km, and the corresponding orbital period is about 1.5 hours to 2 hours. The signal propagation delay of single-hop communication between users is generally less than 20ms. The maximum satellite viewing time is 20 minutes. The signal propagation distance is short, the link loss is small, and the transmit power requirement for the user terminal device is not high.

### 2. GEO

The geostationary earth orbit satellite has an orbital altitude of 35,786km and a 24-hour rotation period around the earth. The signal propagation delay of single-hop communication between users is generally 250ms.

In order to ensure the coverage of satellites and improve the system capacity of the entire satellite communication system, satellites use multiple beams to cover the ground. One satellite can form dozens or even hundreds of beams to cover the ground; one satellite beam can cover a ground area with a diameter ranging from tens to hundreds of kilometers.

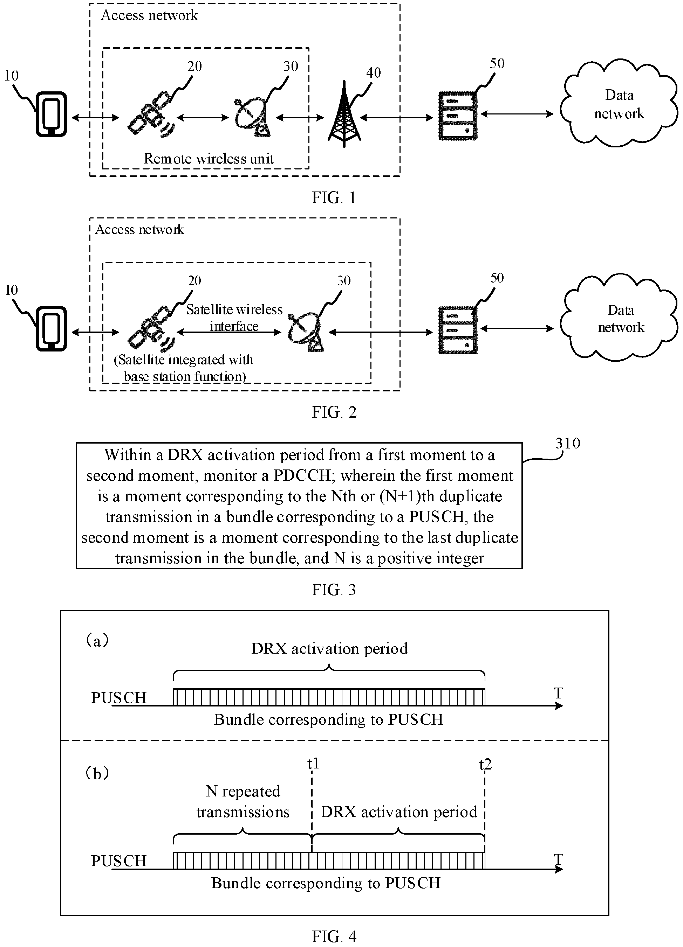

Referring to FIG. 1, which shows a schematic diagram of a satellite network architecture, the communication satellites in the satellite network architecture are satellites with transparent forwarding (transparent payload). As shown in FIG. 1, the satellite network architecture includes: a terminal device 10, a satellite 20, an NTN gateway 30, an access network device 40 and a core network device 50.

Communication between the terminal device 10 and the access network device 40 may be performed through an air interface (e.g., a Uu interface). In the architecture shown in FIG. 1, the access network device 40 can be deployed on the ground, and the uplink and downlink communication between the terminal device 10 and the access network device 40 can be relayed and transmitted through the satellite 20 and the NTN gateway 30 (usually located on the ground). Taking uplink transmission as an example, the terminal device 10 sends the uplink signal to the satellite 20, the satellite 20 forwards the above-mentioned uplink signal to the NTN gateway 30, and then the NTN gateway 30 forwards the above-mentioned uplink signal to the access network device 40, and subsequently the network device 40 sends the above-mentioned uplink signal to the core network device 50. Taking downlink transmission as an example, the downlink signal from the core network device 50 is sent to the access network device 40, the access network device 40 sends the downlink signal to the NTN gateway 30, the NTN gateway 30 forwards the above-mentioned downlink signal to the satellite 20, and then the satellite 20 forwards the above-mentioned downlink signal to the terminal device 10.

Referring to FIG. 2, which shows a schematic diagram of another satellite network architecture, the communication satellites in the satellite network architecture are regenerative payload satellites. As shown in FIG. 2, the satellite network architecture includes: a terminal device 10, a satellite 20, an NTN gateway 30 and a core network device 50.

In the architecture shown in FIG. 2, the function of the access network device 40 is integrated on the satellite 20, that is, the satellite 20 has the function of the access network device 40. Communication between the terminal device 10 and the satellite 20 can be performed through an air interface (such as a Uu interface). Communication between the satellite 20 and the NTN gateway 30 (usually located on the ground) can be performed through Satellite Radio Interface (SRI).

In the architecture shown in FIG. 2, taking uplink transmission as an example, the terminal device 10 sends the uplink signal to the satellite 20, the satellite 20 forwards the above-mentioned uplink signal to the NTN gateway 30, and then the NTN gateway 30 sends the above-mentioned uplink signal to the core network device 50. Taking downlink transmission as an example, the downlink signal from the core network device 50 is sent to the NTN gateway 30, the NTN gateway 30 forwards the downlink signal to the satellite 20, and then the satellite 20 forwards the above-mentioned downlink signal to the terminal device 10.

In the above-mentioned network architectures shown in FIG. 1 and FIG. 2, the access network device 40 is a device for providing wireless communication services for the terminal device 10. A connection can be established between the access network device 40 and the terminal device 10, so as to perform communication through the connection, including the interaction of signaling and data. The number of the access network devices 40 may be multiple, and communication between two adjacent access network devices 40 may also be performed in a wired or wireless manner. The terminal device 10 can switch between different access network devices 40, that is, establish connections with different access network devices 40.

Taking a cellular communication network as an example, the access network device 40 in the cellular communication network may be a base station. The base station is an apparatus deployed in an access network to provide a wireless communication function for the terminal device 10. The base station may include various forms of macro base station, micro base station, relay station, access point and so on. In systems using different radio access technologies, the names of devices with base station functions may be different, for example, in 5G NR systems, they are called gNodeBs or gNBs. As communication technology evolves, the name "base station" may change. For convenience of description, in the embodiments of the present application, the above-mentioned apparatuses for providing wireless communication functions for the terminal device 10 are collectively referred to as a base station or access network device.

In addition, the terminal device 10 involved in the embodiments of the present application may include various handheld devices with wireless communication functions, vehicle-mounted devices, wearable devices, computing devices, or other processing devices connected to wireless modems, as well as various forms of User Equipment (UE), Mobile Station (MS), terminal device and so on. For convenience of description, in the embodiments of the present application, the devices mentioned above are collectively referred to as a terminal device. In the embodiments of the present application, "UE" is used in some places to represent "terminal device". In the embodiments of the present application, the "network device" may be an access network device (such as a base station) or a satellite.

In addition, taking the 5G NTN network as an example, the NTN network may include multiple satellites 20. One satellite 20 can cover a certain range of ground areas and provide wireless communication services for the terminal devices 10 on the ground areas. In addition, the satellites 20 can orbit around the earth, and by arranging a plurality of satellites 20, communication coverage of different areas on the earth's surface can be achieved.

In addition, in the embodiments of the present application, the terms "network" and "system" are often used interchangeably, but those skilled in the art can understand their meanings. The technical solutions described in the embodiments of the present application may be applicable to a Long Term Evolution (LTE) system, a 5G NR system, and subsequent evolution systems of 5G NR system or other communication systems, which is not limited in the present application.

Before introducing the technical solutions of the present application, some background technical knowledge involved in the present application is introduced and explained.

### 1. enhanced Machine Type Communication (eMTC) and its physical channel

MTC Physical Downlink Control Channel (MPDCCH) is used to send scheduling information, based on the Enhanced Physical Downlink Control Channel (EPDCCH) design of LTE R11, the terminal device receives control information based on Demodulation Reference Signal (DMRS), supports functions such as control information precoding and beamforming, one EPDCCH transmits one or more Enhanced Control Channel Elements (ECCEs), the aggregation level is {1,2,4,8,16,32}, each ECCE consists of multiple Enhanced Resource Element Groups (EREGs). The maximum number of repetitions Rmax of MPDCCH can be configured, and the value range is {1, 2, 4, 8, 16, 32, 64, 128, 256}.

The eMTC Physical Downlink Shared Channel (PDSCH) is basically the same as the LTE PDSCH channel, but adds repetition and narrow-band frequency hopping to improve PDSCH channel coverage and interference averaging. The eMTC terminal device can work in two modes, i.e., Mode A and Mode B. In Mode A, the maximum number of uplink and downlink Hybrid Automatic Repeat Request (HARQ) processes is 8, and in this mode, the number of PDSCH repetitions is {1,4,16,32}. In Mode B, the maximum number of uplink and downlink HARQ processes is 2, and in this mode, the number of PDSCH repetitions is {4,16,64,128,256,512,1024,2048}.

The eMTC Physical Uplink Control Channel (PUCCH) has the same frequency domain resource format as LTE, and supports frequency hopping and repeated transmission. Mode A supports sending HARQ-ACK/NACK, Scheduling Request (SR), Channel State Information (CSI) on PUCCH, that is, supports PUCCH format 1/1a/2/2a, and the supported number of repetitions is {1, 2, 4, 8}; Mode B does not support CSI feedback, that is, only supports PUCCH format 1/1a, and the supported number of repetitions is {4, 8, 16, 32}.

The eMTC Physical Uplink Shared Channel (PUSCH) is the same as LTE, but the maximum number of schedulable Resource Blocks (RBs) is limited to 6. Two modes of Mode A and Mode B are supported. The number of repetitions of Mode A may be {8,16,32}, Mode A supports up to 8 processes, and has a relatively high rate; Mode B covers a relatively long distance, and the number of repetitions may be {192,256,384,512,768,1024,1536,2048}, and supports up to 2 uplink HARQ processes.

### 2. LTE Discontinuous Reception (DRX) process

In LTE, the network may configure the Discontinuous Reception (DRX) function for the terminal device, so that the terminal device discontinuously monitors the PDCCH, so as to achieve the purpose of saving the power of the terminal device. Each Medium Access Control (MAC) entity has one DRX configuration, and the configuration parameter of DRX includes:
- drx cycle: DRX cycle;
- drx-onDurationTimer: DRX duration timer;
- drx-StartOffset: a delay for UE to start drx-onDurationTimer;
- drx-InactivityTimer: DRX inactivity timer;
- drx-RetransmissionTimer: DRX downlink retransmission timer, each downlink HARQ process except the broadcast HARQ process corresponds to one drx-RetransmissionTimer (DRX downlink retransmission timer); it should be noted that in LTE, the name of the DRX downlink retransmission timer does not contain the word "DL";
- drx-ULRetransmissionTimer: DRX uplink retransmission timer, each uplink HARQ process corresponds to one drx-ULRetransmissionTimer.

If the terminal device is configured with DRX, the terminal device needs to monitor the PDCCH during the DRX activation period. The DRX activation period includes the following situations:
- any one of seven timers: drx-onDurationTimer (DRX duration timer), drx-InactivityTimer (DRX inactivity timer), drx-RetransmissionTimer (DRX downlink retransmission timer), drx-RetransmissionTimerShortTTI (DRX downlink short TTI retransmission timer), drx-ULRetransmissionTimer (DRX uplink retransmission timer), drx-ULRetransmissionTimerShortTTI (DRX uplink short TTI retransmission timer) and mac-ContentionResolutionTimer (contention resolution timer) is running.
- SR is sent on PUCCH/ Short PUCCH (SPUCCH) and is in pending (waiting) state.
- In the contention-based random access procedure, the terminal device has not received one initial transmission indicated by the Cell-Radio Network Temporary Identifier (C-RNTI) scrambled PDCCH after successfully receiving the random access response.
- Uplink grant (UL grant) may be received for one pending HARQ retransmission, and there is data in the HARQ buffer of the asynchronous HARQ process.
- mpdcch-UL-HARQ-ACK-FeedbackConfig (uplink HARQ-ACK feedback for MPDCCH) is configured and repeated transmission within one bundle is currently being performed according to UL_REPETITION_NUMBER (maximum number of repeated transmissions for PUSCH).

The conditions for the terminal device to start or restart the HARQ RTT Timer are:
if the terminal device receives one PDCCH indicating downlink transmission, or if the terminal has a configured downlink grant in the subframe, then:
a) if the terminal device is a Narrow Band Internet of Things (NB-IoT) terminal device or an eMTC terminal device, then:
   a1) if the physical layer indicates that multiple Transport Block (TB) transmissions are scheduled, the terminal device starts the HARQ RTT Timer corresponding to the downlink HARQ process used by the PDSCH of each TB in the multiple TBs in the subframe where the last repeated transmission of the PDSCH of the last TB in the multiple TBs is received;
   a2) otherwise, the terminal device starts the HARQ RTT Timer corresponding to the downlink HARQ process used by the PDSCH in the subframe where the last repeated transmission of the PDSCH is received;
b) otherwise, the HARQ RTT Timer corresponding to the downlink HARQ process used by the PDSCH is started.

If the HARQ RTT Timer times out, then: if the data decoding of the HARQ process fails, the terminal device starts the drx-RetransmissionTimer (DRX downlink retransmission timer) corresponding to the downlink HARQ process. For the NB-IoT terminal device, if the physical layer indicates that there are multiple TBs associated with the HARQ RTT Timer, the drx-InactivityTimer is started or restarted after the HARQ RTT Timers corresponding to all these HARQ processes have timed out; otherwise, drx-InactivityTimer is directly started or restarted.

The conditions for the terminal device to start or restart the UL HARQ RTT Timer are:
if the terminal device receives a PDCCH indicating one uplink transmission using an asynchronous HARQ process, or if the terminal device has a configured uplink grant for a certain asynchronous HARQ process in this subframe, or if the terminal device receives a PDCCH indicating an uplink transmission using one automatic HARQ process transmission, then:
a) if mpdcch-UL-HARQ-ACK-FeedbackConfig is not configured
   a1) if the physical layer indicates that multiple TB transmissions are scheduled, then the terminal device starts the UL HARQ RTT Timer corresponding to the uplink HARQ process used by the PUSCH of each of the multiple TBs in the subframe where the last repeated transmission of the PUSCH of the last TB in the multiple TBs is completed;
   a2) otherwise, the terminal device starts the UL HARQ RTT Timer corresponding to the uplink HARQ process used by the PUSCH in the subframe where the last repeated transmission of the PUSCH is completed;
b) if mpdcch-UL-HARQ-ACK-FeedbackConfig is configured and no UL HARQ-ACK feedback is received on PDCCH until the last repeated transmission of PUSCH
   b1) the terminal device starts or restarts the drx-ULRetransmissionTimer corresponding to the used uplink HARQ process in the subframe where the last repeated transmission of the PUSCH is completed.

If the UL HARQ RTT Timer corresponding to a certain uplink HARQ process times out, the terminal device starts the drx-ULRetransmissionTimer corresponding to this uplink HARQ process. For the NB-IoT terminal device, if the physical layer indicates that multiple TBs are associated with the UL HARQ RTT Timer, then the drx-InactivityTimer is started or restarted when the UL HARQ RTT Timers corresponding to all these HARQ processes have timed out; otherwise, drx-InactivityTimer is directly started or restarted.

Referring to FIG. 3, which shows a flowchart of a method for monitoring a PDCCH provided by an embodiment of the present application, the method may be executed by a terminal device, and the method may include the following steps.

In step 310, the PDCCH is monitored during a DRX activation period from a first moment to a second moment; where the first moment is a moment corresponding to a N^{th} or (N+1)^{th} repeated transmission in a bundle corresponding to a PUSCH, the second moment is a moment corresponding to a last repeated transmission in the bundle, and N is a positive integer.

In an exemplary embodiment, if the terminal device is configured with DRX, the terminal device needs to monitor the PDCCH during the DRX activation period.

In an exemplary embodiment, the DRX activation period includes a time period from the first moment to the second moment. The first moment is the moment corresponding to the N^{th} or (N+1)^{th} repeated transmission in the bundle corresponding to the PUSCH, the second moment is the moment corresponding to the last repeated transmission in the bundle, and N is a positive integer. The bundle corresponding to the PUSCH may include multiple repeated transmissions. For example, the number (or times) of repeated transmissions included in the bundle corresponding to the PUSCH may be any of {192, 256, 384, 512, 768, 1024, 1536, 2048}.

In the related art, the terminal device starts to monitor the PDCCH from the moment corresponding to the first repeated transmission in the bundle corresponding to the PUSCH, but there is at least one RTT between the terminal device and the network device from sending the PUSCH from the terminal device to the network device to sending the PDCCH (such as sending uplink HARQ-ACK feedback on the PDCCH) to the terminal device after the network device receives the PUSCH. Therefore, it is unnecessary for the terminal device to start monitoring the PDCCH from the moment corresponding to the first repeated transmission, which is not conducive to power saving of the terminal.

In the embodiments of the present application, the terminal device does not start monitoring the PDCCH from the moment corresponding to the first repeated transmission, but starts monitoring the PDCCH from the moment corresponding to the N^{th} or (N+1)^{th} repeated transmission, and the N^{th} or (N+1)^{th} repeated transmission is not the first repeated transmission, for example, N is an integer greater than 1, and the value of N can be set according to values such as the RTT between the terminal device and the network device, so as to avoid that the terminal device performs some unnecessary PDCCH monitoring, which is beneficial to the power saving of the terminal.

In an exemplary embodiment, N is a value obtained by rounding one of the following parameters:
(1) RTT value between the terminal device and the access network device;
(2) TA value of the terminal device;
(3) RTT between the terminal device and the satellite;
(4) the sum of the RTT value between the terminal device and the access network device and the network processing time;
(5) the sum of the TA value of the terminal device and the network processing time;
(6) the sum of RTT between the terminal device and the satellite and the network processing time.

Optionally, the network processing time includes the access network device processing time (or referred to as the base station processing time) and/or the satellite processing time. The network processing time (including the access network device processing time and/or the satellite processing time) may be notified to the terminal device by the network side through a system message or Radio Resource Control (RRC) dedicated signaling.

Optionally, the above rounding is rounding up or rounding down.

Optionally, the above moment is in milliseconds or subframes.

Optionally, the terminal device includes at least one of the following types: eMTC terminal device, NB-IoT terminal device, or low-capability terminal device (i.e., RedCap terminal device). It should be noted that, for the eMTC terminal device, what it monitors is the MPDCCH.

In an exemplary embodiment, the terminal device monitors the PDCCH during the DRX activation period, and the DRX activation period includes at least one of the following conditions.
(1) Any one of the seven timers: drx-onDurationTimer (DRX duration timer), drx-InactivityTimer (DRX inactivity timer), drx-RetransmissionTimerDL (DRX downlink retransmission timer), drx-DLRetransmissionTimerShortTTI (DRX downlink short TTI retransmission timer), drx-RetransmissionTimerUL (DRX uplink retransmission timer), drx-ULRetransmissionTimerShortTTI (DRX uplink short TTI retransmission timer) and mac-ContentionResolutionTimer (contention resolution timer) is running.
(2) The SR is sent on the PUCCH/SPUCCH (Short PUCCH) and is in the pending (waiting) state.
(3) In the contention-based random access process, the terminal device has not received one initial transmission indicated by the PDCCH scrambled by the C-RNTI after successfully receiving the random access response.
(4) UL grant (uplink grant) can be received for one pending HARQ retransmission, and there is data in the HARQ buffer of the asynchronous HARQ process.
(5) mpdcch-UL-HARQ-ACK-FeedbackConfig (uplink HARQ-ACK feedback for MPDCCH) is configured and according to UL_REPETITION_NUMBER (the maximum number of repeated transmissions of PUSCH), the repeated transmissions other than the first (N-1) or the first N repeated transmissions in a bundle are currently performed, where N is an integer greater than 1. The time period defined by the situation (5) is the time period from the first moment to the second moment described above.

As shown in FIG. 4, part (a) of FIG. 4 shows that the solution provided by the related art is used. The terminal device starts to monitor the PDCCH from the moment corresponding to the first repeated transmission in the bundle corresponding to the PUSCH, that is, the time period corresponding to the entire bundle is all DRX activation periods during which the terminal device performs PDCCH monitoring. Part (b) of FIG. 4 shows that the technical solution provided by the present application is used. The terminal device starts to monitor the PDCCH from the moment corresponding to the N^{th} or (N+1)^{th} repeated transmission in the bundle corresponding to the PUSCH, and the DRX activation period includes the time period from the first moment t1 to the second moment t2.

In the embodiments of the present application, the terminal device does not start monitoring the PDCCH from the moment corresponding to the first repeated transmission in the bundle corresponding to the PUSCH, but starts monitoring from the moment corresponding to the N^{th} or (N+1)^{th} repeated transmission PDCCH, N is an integer greater than 1, and the value of N can be set according to values such as the RTT between the terminal device and the network device, so as to avoid the terminal device from performing some unnecessary PDCCH monitoring, which is beneficial to the power saving of the terminal.

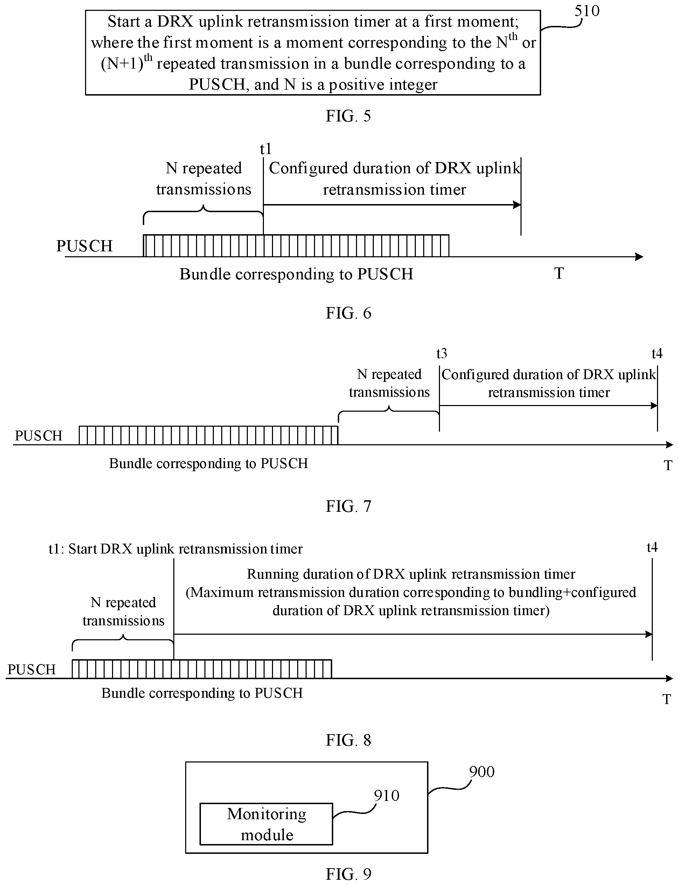

Referring to FIG. 5, which shows a flowchart of a method for controlling a DRX uplink retransmission timer provided by an embodiment of the present application, the method may be executed by a terminal device, and the method may include the following steps.

In step 510: the DRX uplink retransmission timer is started at a first moment; where the first moment is a moment corresponding to the N^{th} or (N+1)^{th} repeated transmission in a bundle corresponding to the PUSCH, and N is a positive integer.

In an exemplary embodiment, if the terminal device is configured with a DRX uplink retransmission timer, the terminal device starts the DRX uplink retransmission timer at the first moment. During the running period of the DRX uplink retransmission timer, in the DRX activation period, the terminal device will monitor the PDCCH. Exemplarily, the terminal device receives RRC configuration information from the network side, and the RRC configuration information is used to configure DRX-related parameters, such as including a DRX uplink retransmission timer and the like.

In an exemplary embodiment, a bundle corresponding to PUSCH may include multiple repeated transmissions, for example, the number (or times) of repeated transmissions included in a bundle corresponding to PUSCH may be any of {192, 256, 384, 512, 768, 1024, 1536, 2048}.

In an exemplary embodiment, N is a value obtained by rounding one of the following parameters:
RTT value between the terminal device and the access network device;
TA value of the terminal device;
RTT between the terminal device and the satellite;
the sum of the RTT value between the terminal device and the access network device and the network processing time;
the sum of the TA value of the terminal device and the network processing time;
the sum of RTT between the terminal device and the satellite and the network processing time.

Optionally, the network processing time includes the access network device processing time (or referred to as the base station processing time) and/or the satellite processing time. The network processing time (including the access network device processing time and/or the satellite processing time) may be notified to the terminal device by the network side through a system message or RRC dedicated signaling.

Optionally, the above rounding is rounding up or rounding down.

Optionally, the above moment is in milliseconds or subframes.

Optionally, the terminal device includes at least one of the following types: eMTC terminal device, NB-IoT terminal device, or low-capability terminal device (i.e., RedCap terminal device). It should be noted that, for the eMTC terminal device, what it monitors is the MPDCCH.

In an exemplary embodiment, the running duration of the DRX uplink retransmission timer is the sum of the maximum retransmission duration corresponding to the above-mentioned bundle and the configured duration of the DRX uplink retransmission timer. The maximum retransmission duration corresponding to the bundle refers to the duration occupied by completing all repeated transmissions in the bundle. The configured duration of the DRX uplink retransmission timer refers to the running duration configured by the network device for the DRX uplink retransmission timer through the RRC configuration information.

In an exemplary embodiment, if the terminal device receives a PDCCH indicating one uplink transmission using an asynchronous HARQ process, or if the terminal device has a configured uplink grant for a certain asynchronous HARQ process in the subframe, or if the terminal device receives a PDCCH indicating to an uplink transmission using one automatic HARQ process, if mpdcch-UL-HARQ-ACK-FeedbackConfig (uplink HARQ-ACK feedback for MPDCCH) is configured and no UL HARQ-ACK feedback is received on PDCCH until the last repeated transmission of PUSCH, the terminal device starts or restarts the DRX uplink retransmission timer corresponding to the used uplink HARQ process at the moment corresponding to the N^{th} or (N+1)^{th} repeated transmission of the PUSCH. Optionally, the running duration of the DRX uplink retransmission timer is the sum of the maximum retransmission duration corresponding to the bundle of the PUSCH and the configured duration of the DRX uplink retransmission timer.

In an exemplary embodiment, in the case that the terminal device receives the uplink HARQ-ACK feedback of the first asynchronous HARQ process, the terminal device stops the DRX uplink retransmission timer corresponding to the first asynchronous HARQ process, or stops the DRX uplink retransmission timers corresponding to all asynchronous HARQ processes of the terminal device. The first asynchronous HARQ process may be any asynchronous HARQ process among all asynchronous HARQ processes corresponding to the PUSCH. For example, if the terminal device receives the uplink HARQ-ACK feedback of the first asynchronous HARQ process and the PUSCH transmission has not been completed, the terminal device stops the DRX uplink retransmission timer corresponding to the first asynchronous HARQ process. If the terminal device receives the uplink HARQ-ACK feedback of the first asynchronous HARQ process and the PUSCH transmission has been completed, the terminal device stops the DRX uplink retransmission timers corresponding to all asynchronous HARQ processes corresponding to the PUSCH.

In an exemplary embodiment, in the case that the terminal device receives the uplink HARQ-ACK feedback of the first asynchronous HARQ process, the terminal device cancels the remaining repeated transmission(s) in the bundle corresponding to the PUSCH. After receiving the uplink HARQ-ACK feedback sent by the network device, the terminal device stops the subsequent repeated PUSCH transmission(s) in time, so as to achieve the purpose of energy saving.

Hereinafter, the solutions of the embodiment will be described with reference to FIG. 6, FIG. 7 and FIG. 8.

As shown in FIG. 6, the earliest time point when the terminal device can receive the uplink HARQ-ACK feedback is the first moment t1, that is, the moment corresponding to the N^{th} or (N+1)^{th} repeated transmission in the bundle corresponding to the PUSCH. This time corresponds to that the first repeated transmission of the PUSCH is successfully detected by the network device, and the uplink HARQ-ACK feedback is immediately sent to the terminal device. That is to say, the earliest start moment of the DRX uplink retransmission timer is the first moment t1.

As shown in FIG. 7, the latest possible time point when the terminal device receives the uplink HARQ-ACK feedback is the third moment t3, that is, the moment corresponding to the last repeated transmission in the bundle corresponding to the PUSCH has passed the duration corresponding to N or (N+1) repeated transmissions. This time corresponds to that the network device sends uplink HARQ-ACK feedback to the terminal device after detecting the last repeated transmission of the PUSCH. That is to say, the latest start moment of the DRX uplink retransmission timer is the third moment t3. The interval duration between the first moment t1 and the third moment t3 is the maximum retransmission duration corresponding to the bundle of the PUSCH. In addition, the fourth moment t4 is defined as the third moment t3 plus the configured duration of the DRX uplink retransmission timer.

Since the terminal device is not sure how many PUSCH repeated transmissions the network device will undergo to receive the PUSCH correctly, as shown in FIG. 8, the running time of the DRX uplink retransmission timer needs to start from the first moment t1, and continuously cover the maximum retransmission duration corresponding to the bundle and the configured duration of the DRX uplink retransmission timer. That is, the running time of the DRX uplink retransmission timer needs to start from the first moment t1 to the fourth moment t4.

In the related art, the terminal device starts the DRX uplink retransmission timer at the moment corresponding to the last repeated transmission in the bundle corresponding to the PUSCH, and the running duration of the DRX uplink retransmission timer is configured by the network device through the RRC configuration information (which is denoted as the configured duration of the DRX uplink retransmission timer). However, the related art does not fully consider when the network device receives the repeated transmission of the PUSCH and performs uplink HARQ-ACK feedback, and when the terminal device can receive the uplink HARQ-ACK feedback from the network device, resulting in that the setting of the startup timing and the running duration of the DRX uplink retransmission timer is not accurate enough, which is not conducive to the terminal device receiving the uplink HARQ-ACK feedback from the network device in time.

In the embodiments of the present application, the terminal device does not start the DRX uplink retransmission timer from the moment corresponding to the last repeated transmission (that is, the above-mentioned N^{th} or (N+1)^{th} repeated transmission is not the last repeated transmission), instead, the DRX uplink retransmission timer is started in a period of time after the first repeated transmission. During this period of time, the RTT between the terminal device and the network device and the processing time of the network device can be considered, so that the DRX uplink retransmission is started at the right time, rather than being started too early or too late, thereby ensuring that the terminal device does not miss receiving the uplink HARQ-ACK feedback sent by the network device.

In addition, the running duration of the DRX uplink retransmission timer is the sum of the maximum retransmission duration corresponding to the bundle and the configured duration of the DRX uplink retransmission timer, ensuring that the running duration of the DRX uplink retransmission timer can cover all possible timings of sending the uplink HARQ-ACK feedback by the network device, ensuring that the terminal device does not miss the uplink HARQ-ACK feedback sent by the network device, so that after receiving the uplink HARQ-ACK feedback sent by the network device, the terminal device can stop subsequent PUSCH repeated transmission in time to achieve the purpose of energy saving.

The following are apparatus embodiments of the present application, which can be used to execute the method embodiments of the present application. For details not disclosed in the apparatus embodiments of the present application, the method embodiments of the present application are referred to.

Referring to FIG. 9, which shows a block diagram of an apparatus for monitoring a PDCCH provided by an embodiment of the present application. The apparatus has the function of realizing the above-mentioned method for monitoring a PDCCH, and the function can be realized by hardware or by executing corresponding software in hardware. The apparatus may be the terminal device described above, or may be set in the terminal device. As shown in FIG. 9, the apparatus 900 may include: a monitoring module 910.

The monitoring module 910 is configured to monitor a PDCCH during a DRX activation period from a first moment to a second moment;
where the first moment is a moment corresponding to a N^{th} or (N+1)^{th} repeated transmission in a bundle corresponding to a PUSCH, the second moment is a moment corresponding to a last repeated transmission in the bundle, and N is a positive integer.

In an exemplary embodiment, N is a value obtained by rounding one of the following parameters:
an RTT value between the terminal device and an access network device;
a TA value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

In an exemplary embodiment, the network processing time includes access network device processing time and/or a satellite processing time.

In an exemplary embodiment, the rounding is rounding up or rounding down.

In an exemplary embodiment, the network processing time is notified to the terminal device through a system message or RRC dedicated signaling.

In an exemplary embodiment, the moment is in milliseconds or subframes.

In an exemplary embodiment, the terminal device includes at least one of the following types: an eMTC terminal device, a NB-IoT terminal device, and a low-capability terminal device.

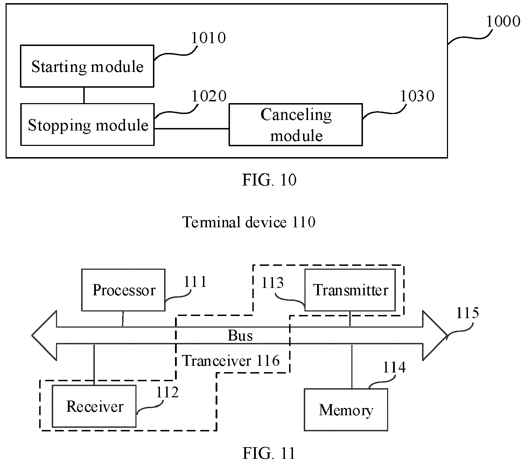

Referring to FIG. 10, which shows a block diagram of an apparatus for controlling a DRX uplink retransmission timer provided by an embodiment of the present application. The apparatus has the function of implementing the above-mentioned method for controlling a DRX uplink retransmission timer, and the function can be implemented by hardware or by executing corresponding software in hardware. The apparatus may be the terminal device described above, or may be set in the terminal device. As shown in FIG. 10, the apparatus 1000 may include: a starting module 1010.

The starting module 1010 is configured to start a DRX uplink retransmission timer at a first moment;
where the first moment is a moment corresponding to a N^{th} or (N+1)^{th} repeated transmission in a bundle corresponding to a PUSCH, and N is a positive integer.

In an exemplary embodiment, N is a value obtained by rounding one of the following parameters:
an RTT value between the terminal device and an access network device;
a TA value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

In an exemplary embodiment, the network processing time includes an access network device processing time and/or a satellite processing time.

In an exemplary embodiment, the rounding is rounding up or rounding down.

In an exemplary embodiment, the network processing time is notified to the terminal device through a system message or RRC dedicated signaling.

In an exemplary embodiment, a running duration of the DRX uplink retransmission timer is a sum of a maximum retransmission duration corresponding to the bundle and a configured duration of the DRX uplink retransmission timer.

In an exemplary embodiment, as shown in FIG. 10, the apparatus 1000 further includes: a stopping module 1020.

The stopping module 1020 is configured to, in a case of receiving an uplink HARQ-ACK feedback of a first asynchronous HARQ process, stop a DRX uplink retransmission timer corresponding to the first asynchronous HARQ process, or stop DRX uplink retransmission timers corresponding to all asynchronous HARQ processes of the terminal device.

In an exemplary embodiment, as shown in FIG. 10, the apparatus 1000 further includes: a canceling module 1030.

The canceling module 1030 is configured to cancel a remaining repeated transmission in the bundle in a case of receiving an uplink HARQ-ACK feedback of a first asynchronous HARQ process.

In an exemplary embodiment, the moment is in milliseconds or subframes.

In an exemplary embodiment, the terminal device includes at least one of the following types: an eMTC terminal device, a NB-IoT terminal device, and a low-capability terminal device.

It should be noted that, when the apparatuses provided in the above embodiments realizes its functions, only the division of the above functional modules is used as an example for illustration. In practical applications, the above functions can be allocated to different functional modules according to actual needs. That is, the content structure of the device is divided into different functional modules to complete all or part of the functions described above.

Regarding the apparatuses in the above-mentioned embodiments, the specific manner in which each module performs operations has been described in detail in the embodiments of the method, and will not be described in detail here.

Referring to FIG. 11, which shows a schematic structural diagram of a terminal device 110 provided by an embodiment of the present application. The terminal device 110 may include: a processor 111, a receiver 112, a transmitter 113, a memory 114 and a bus 115.

The processor 111 includes one or more processing cores, and the processor 111 executes various functional applications and information processing by running software programs and modules.

The receiver 112 and the transmitter 113 may be implemented as one transceiver 116, which may be a communication chip.

The memory 114 is connected to the processor 111 through the bus 115.

The memory 114 can be used to store a computer program, and the processor 111 is used to execute the computer program, so as to implement each step performed by the terminal device in the above method embodiments.

In addition, the memory 114 can be implemented by any type of volatile or non-volatile storage device or a combination thereof, and the volatile or non-volatile storage device includes but is not limited to: a Random-Access Memory (RAM) and a Read-Only Memory (ROM), an Erasable Programmable Read-Only Memory (EPROM), an Electrically Erasable Programmable Read-Only Memory (EEPROM), a flash memory or other solid-state memory technology, a Compact Disc Read-Only Memory (CD-ROM), a Digital Video Disc (DVD) or other optical storage, tape cassettes, magnetic tapes, magnetic disk storage or other magnetic storage devices.

In an exemplary embodiment, the processor 111 is configured to execute a computer program to implement the above-mentioned method for monitoring a PDCCH. Specifically:
the processor 111 is configured to monitor a PDCCH during a DRX activation period from a first moment to a second moment;
where the first moment is a moment corresponding to a N^{th} or (N+1)^{th} repeated transmission in a bundle corresponding to a physical uplink shared channel (PUSCH), the second moment is a moment corresponding to a last repeated transmission in the bundle, and N is a positive integer.

In an exemplary embodiment, N is a value obtained by rounding one of the following parameters:
an RTT value between the terminal device and an access network device;
a TA value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

In an exemplary embodiment, the network processing time includes access network device processing time and/or satellite processing time.

In an exemplary embodiment, the rounding is rounding up or rounding down.

In an exemplary embodiment, the network processing time is notified to the terminal device through a system message or RRC dedicated signaling.

In an exemplary embodiment, the moment is in milliseconds or subframes.

In an exemplary embodiment, the terminal device includes at least one of the following types: an eMTC terminal device, a NB-IoT terminal device, and a low-capability terminal device.

In an exemplary embodiment, the processor 111 is configured to execute a computer program to implement the above-mentioned method for controlling a DRX uplink retransmission timer. Specifically:
the processor 111 is configured to start a DRX uplink retransmission timer at a first moment;
where the first moment is a moment corresponding to a N^{th} or (N+1)^{th} repeated transmission in a bundle corresponding to a PUSCH, and N is a positive integer.

In an exemplary embodiment, N is a value obtained by rounding one of the following parameters:
an RTT value between the terminal device and an access network device;
a TA value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

In an exemplary embodiment, the network processing time includes access network device processing time and/or satellite processing time.

In an exemplary embodiment, the rounding is rounding up or rounding down.

In an exemplary embodiment, the network processing time is notified to the terminal device through a system message or RRC dedicated signaling.

In an exemplary embodiment, a running duration of the DRX uplink retransmission timer is a sum of the maximum retransmission duration corresponding to the bundle and a configured duration of the DRX uplink retransmission timer.

In an exemplary embodiment, the processor 111 is further configured to, in the case of receiving an uplink HARQ-ACK feedback of a first asynchronous HARQ process, stop a DRX uplink retransmission timer corresponding to the first asynchronous HARQ process, or stop DRX uplink retransmission timers corresponding to all asynchronous HARQ processes of the terminal device.

In an exemplary embodiment, the processor 111 is further configured to cancel a remaining repeated transmission(s) in the bundle in the case of receiving the uplink HARQ-ACK feedback of the first asynchronous HARQ process.

In an exemplary embodiment, the moment is in milliseconds or subframes.

In an exemplary embodiment, the terminal device includes at least one of the following types: an eMTC terminal device, a NB-IoT terminal device, or a low-capability terminal device.

An embodiment of the present application further provides a computer-readable storage medium, where a computer program is stored in the storage medium, and the computer program is configured to be executed by a processor to implement the above-mentioned method for monitoring a PDCCH or the above-mentioned method for controlling a DRX uplink retransmission timer.

Optionally, the computer-readable storage medium may include: a Read-Only Memory (ROMy), a Random-Access Memory (RAM), Solid State Drives (SSD), or an optical disk. The random access memory may include a Resistance Random Access Memory (ReRAM) and a Dynamic Random Access Memory (DRAM).

An embodiment of the present application further provides a chip, where the chip includes a programmable logic circuit and/or program instructions, and when the chip is running, it is used to implement the above-mentioned method for monitoring a PDCCH or the above-mentioned method for controlling a DRX uplink retransmission timer.

An embodiment of the present application further provides a computer program product or computer program, where the computer program product or computer program includes computer instructions, and the computer instructions are stored in a computer-readable storage medium, and the processor reads and executes the computer instructions from the computer-readable storage medium to implement the above-mentioned method for monitoring a PDCCH or the above-mentioned method for controlling a DRX uplink retransmission timer.

It should be understood that the "indication" mentioned in the embodiments of the present application may be a direct indication, an indirect indication, or an associated relationship. For example, if A indicates B, it can mean that A directly indicates B, for example, B can be obtained through A; it can also mean that A indicates B indirectly, such as A indicates C, and B can be obtained through C; it can also mean that there is an association relation between A and B.

In the description of the embodiments of the present application, the term "corresponding" may indicate that there is a direct or indirect corresponding relationship between the two, or may indicate that there is an associated relationship between the two, or may be a relation of indicating and being indicated, configuring and being configured, etc.

As used herein, "plurality" refers to two or more. "And/or" describes the association relationship of the associated objects, and means that there can be three kinds of relationships, for example, A and/or B may mean that A exists alone, A and B exist at the same time, and B exists alone. The character "/" generally indicates that the associated objects are an "or" relationship.

In addition, the numbering of the steps described in the present disclosure only exemplarily shows a possible execution sequence between the steps. In some other embodiments, the above steps may also be executed in different order, for example, two steps with different numbers are performed at the same time, or two steps with different numbers are performed in a reverse order to that shown in the figure, which is not limited in the embodiment of the present application.

Those skilled in the art should realize that, in one or more of the above examples, the functions described in the embodiments of the present application may be implemented by hardware, software, firmware, or any combination thereof. When implemented in software, the functions may be stored on a computer-readable medium or transmitted as one or more instructions or code on the computer-readable medium. The computer-readable medium includes both the computer storage medium and the communication medium, and the communication medium includes any medium that facilitates transfer of a computer program from one place to another. The storage medium may be any available medium that can be accessed by a general purpose or special purpose computer.

The above are only exemplary embodiments of the present application and are not intended to limit the present application. Any modifications, equivalent replacements, improvements, etc. made within the spirit and principles of the present application shall be included in the protection scope of the present application.

## Claims

1. A method for monitoring a physical downlink control channel (PDCCH), wherein the method is performed by a terminal device, and the method comprises:
monitoring a PDCCH during a discontinuous reception (DRX) activation period from a first moment to a second moment;
wherein the first moment is a moment corresponding to a N^{th} or (N+1)^{th} repeated transmission in a bundle corresponding to a physical uplink shared channel (PUSCH), the second moment is a moment corresponding to a last repeated transmission in the bundle, and N is a positive integer.

2. The method according to claim 1, wherein N is a value obtained by rounding one of following parameters:
a round trip time (RTT) value between the terminal device and an access network device;
a timing advance (TA) value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

3. The method according to claim 2, wherein the network processing time comprises an access network device processing time and/or a satellite processing time.

4. The method according to claim 2 or 3, wherein the rounding is rounding up or rounding down.

5. The method according to any one of claims 2 to 4, wherein the network processing time is notified to the terminal device through a system message or a radio resource control (RRC) dedicated signaling.

6. The method according to any one of claims 1 to 5, wherein the moment is in milliseconds or subframes.

7. The method according to any one of claims 1 to 6, wherein the terminal device comprises at least one of following types: an enhanced machine type communication (eMTC) terminal device, a narrowband Internet of Things (NB-IoT) terminal device, a low-capacity terminal device.

8. A method for controlling a discontinuous reception (DRX) uplink retransmission timer, wherein the method is performed by a terminal device, and the method comprises:
starting a DRX uplink retransmission timer at a first moment;
wherein the first moment is a moment corresponding to a N^{th} or (N+1)^{th} repeated transmission in a bundle corresponding a physical uplink shared channel (PUSCH), and N is a positive integer.

9. The method according to claim 8, wherein N is a value obtained by rounding one of following parameters:
a round trip time (RTT) value between the terminal device and an access network device;
a timing advance (TA) value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

10. The method according to claim 9, wherein the network processing time comprises an access network device processing time and/or a satellite processing time.

11. The method according to claim 9 or 10, wherein the rounding is rounding up or rounding down.

12. The method according to any one of claims 9 to 11, wherein the network processing time is notified to the terminal device through a system message or a radio resource control (RRC) dedicated signaling.

13. The method according to any one of claims 8 to 12, wherein a running duration of the DRX uplink retransmission timer is a sum of a maximum retransmission duration corresponding to the bundle and a configured duration of the DRX uplink retransmission timer.

14. The method according to any one of claims 8 to 13, wherein the method further comprises:
in a case of receiving an uplink HARQ-ACK feedback of a first asynchronous hybrid automatic repeat request (HARQ) process, stopping a DRX uplink retransmission timer corresponding to the first asynchronous HARQ process, or stopping DRX uplink retransmission timers corresponding to all asynchronous HARQ processes of the terminal device.

15. The method according to any one of claims 8 to 14, wherein the method further comprises:
in a case of receiving an uplink HARQ-ACK feedback of a first asynchronous HARQ process, cancelling a remaining repeated transmission in the bundle.

16. The method according to any one of claims 8 to 15, wherein the moment is in milliseconds or subframes.

17. The method according to any one of claims 8 to 16, wherein the terminal device comprises at least one of following types: an enhanced machine type communication (eMTC) terminal device, a narrowband Internet of Things (NB-IoT) terminal device, a low-capacity terminal device.

18. An apparatus for monitoring a physical downlink control channel (PDCCH), comprising:
a monitoring module, configured to monitor a PDCCH during a discontinuous reception (DRX) activation period from a first moment to a second moment;
wherein the first moment is a moment corresponding to a N^{th} or (N+1)^{th} repeated transmission in a bundle corresponding to a physical uplink shared channel (PUSCH), the second moment is a moment corresponding to a last repeated transmission in the bundle, and N is a positive integer.

19. The apparatus according to claim 18, wherein N is a value obtained by rounding one of following parameters:
a round trip time (RTT) value between the terminal device and an access network device;
a timing advance (TA) value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

20. The apparatus according to claim 19, wherein the network processing time comprises an access network device processing time and/or a satellite processing time.

21. The apparatus according to claim 19 or 20, wherein the rounding is rounding up or rounding down.

22. The apparatus according to any one of claims 19 to 21, wherein the network processing time is notified to the terminal device through a system message or a radio resource control (RRC) dedicated signaling.

23. The apparatus according to any one of claims 18 to 22, wherein the moment is in milliseconds or subframes.

24. The apparatus according to any one of claims 18 to 23, wherein the terminal device comprises at least one of following types: an enhanced machine type communication (eMTC) terminal device, a narrowband Internet of Things (NB-IoT) terminal device, a low-capacity terminal device.

25. An apparatus for controlling a discontinuous reception (DRX) uplink retransmission timer, comprising:
a starting module, configured to start a DRX uplink retransmission timer at a first moment;
wherein the first moment is a moment corresponding to a N^{th} or (N+1)^{th} repeated transmission in a bundle corresponding to a physical uplink shared channel (PUSCH), and N is a positive integer.

26. The apparatus according to claim 25, wherein N is a value obtained by rounding one of following parameters:
a round trip time (RTT) value between the terminal device and an access network device;
a timing advance (TA) value of the terminal device;
an RTT between the terminal device and a satellite;
a sum of the RTT value between the terminal device and the access network device and a network processing time;
a sum of the TA value of the terminal device and the network processing time;
a sum of the RTT between the terminal device and the satellite and the network processing time.

27. The apparatus according to claim 26, wherein the network processing time comprises an access network device processing time and/or a satellite processing time.

28. The apparatus according to claim 26 or 27, wherein the rounding is rounding up or rounding down.

29. The apparatus according to any one of claims 26 to 28, wherein the network processing time is notified to the terminal device through a system message or a radio resource control (RRC) dedicated signaling.

30. The apparatus according to any one of claims 25 to 29, wherein a running duration of the DRX uplink retransmission timer is a sum of a maximum retransmission duration corresponding to the bundle and a configured duration of the DRX uplink retransmission timer.

31. The apparatus according to any one of claims 25 to 30, wherein the apparatus further comprises:
a stopping module, configured to, in a case of receiving an uplink HARQ-ACK feedback of a first asynchronous hybrid automatic repeat request (HARQ) process, stop a DRX uplink retransmission timer corresponding to the first asynchronous HARQ process, or stop DRX uplink retransmission timers corresponding to all asynchronous HARQ processes of the terminal device.

32. The apparatus according to any one of claims 25 to 31, wherein the apparatus further comprises:
a canceling module, configured to cancel a remaining repeated transmission in the bundle in a case of receiving an uplink HARQ-ACK feedback of a first asynchronous HARQ process.

33. The apparatus according to any one of claims 25 to 32, wherein the moment is in milliseconds or subframes.

34. The apparatus according to any one of claims 25 to 33, wherein the terminal device comprises at least one of following types: an enhanced machine type communication (eMTC) terminal device, a narrowband Internet of Things (NB-IoT) terminal device, a low-capacity terminal device.

35. A terminal device, wherein the terminal device comprises a processor;
the processor is configured to monitor a physical downlink control channel (PDCCH) during a discontinuous reception (DRX) activation period from a first moment to a second moment;
wherein the first moment is a moment corresponding to a N^{th} or (N+1)^{th} repeated transmission in a bundle corresponding to a physical uplink shared channel (PUSCH), the second moment is a moment corresponding to a last repeated transmission in the bundle, and N is a positive integer.

36. A terminal device, wherein the terminal device comprises a processor;
the processor is configured to start a discontinuous reception (DRX) uplink retransmission timer at a first moment;
wherein the first moment is a moment corresponding to a N^{th} or (N+1)^{th} repeated transmission in a bundle corresponding to a physical uplink shared channel (PUSCH), and N is a positive integer.

37. A computer-readable storage medium, wherein a computer program is stored in the storage medium, and the computer program is configured to be executed by a processor to implement the method for monitoring a physical downlink control channel (PDCCH) according to any one of claims 1 to 7, or the method for controlling a discontinuous reception (DRX) uplink retransmission timer according to any one of claims 8 to 17.

38. A chip, wherein the chip comprises a programmable logic circuit and/or program instructions, when the chip is running, it is configured to implement the method for monitoring a physical downlink control channel (PDCCH) according to any one of claims 1 to 7, or the method for controlling a discontinuous reception (DRX) uplink retransmission timer according to any one of claims 8 to 17.

39. A computer program product or computer program, wherein the computer program product or computer program comprises computer instructions, the computer instructions are stored in a computer-readable storage medium, and a processor reads and executes the computer instructions from the computer-readable storage medium to implement the method for monitoring a physical downlink control channel (PDCCH) according to any one of claims 1 to 7, or the method for controlling a discontinuous reception (DRX) uplink retransmission timer according to any one of claims 8 to 17.
